# EUROPEAN PATENT SPECIFICATION

(11) **EP 4 311 009 B1**
(45) Date of publication and mention of the grant of the patent: **22.07.2026**
(21) Application number: 22887500.1
(22) Date of filing: 21.10.2022
(51) Int. Cl.: H01M 50/503, H01M 50/298, H01M 50/213, H01M 50/522, H01M 50/50, B29C 45/14, H01M 50/227, H01M 50/507, H01M 50/516

(54) **BATTERY MODULE COMPRISING BUS BAR-INTEGRATED CELL FRAME**
BATTERIEMODUL MIT SAMMELSCHIENENINTEGRIERTEM ZELLRAHMEN
MODULE DE BATTERIE COMPRENANT UN CADRE DE CELLULE INTÉGRÉ À UNE BARRE OMNIBUS

(30) Priority: 01.11.2021 KR 20210147743
(43) Date of publication of application: 24.01.2024
(73) Proprietor: LG ENERGY SOLUTION, LTD., Seoul 07335 (KR)
(72) Inventor: PARK, Ji Soo, Daejeon 34122 (KR); LEE, Young Kyu, Daejeon 34122 (KR); BAE, Mun Jun, Daejeon 34122 (KR); SON, Young Su, Daejeon 34122 (KR)
(74) Representative: Plasseraud IP
(86) International application number: PCT/KR2022/016129
(87) International publication number: WO 2023/075304

(56) References cited:
- EP-B1- 2 862 215
- JP-A- 2014 034 178
- JP-A- 2018 067 387
- KR-A- 20170 034 572
- KR-A- 20180 099 438
- KR-A- 20200 012 189
- KR-A- 20200 069 720
- KR-A- 20210 063 940
- US-A1- 2015 179 995
- US-A1- 2018 269 459
- US-A1- 2020 185 682

## Description

### [Technical Field]

This application claims the benefit of priority to Korean Patent Application No. 2021-0147743 filed on November 1, 2021.

The present invention relates to a battery module including a busbar-integrated cell frame configured such that a busbar and a cell frame are integrally formed in order to prevent movement or separation of the busbar.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS).

There are a lithium ion battery, a lithium polymer battery, a nickel cadmium battery, a nickel hydride battery, and a nickel zinc battery as secondary batteries that are widely used at present.

The operating voltage of a unit secondary battery cell, i.e. a unit battery cell, is about 2.0 V to 5.0 V. When output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. In general, a battery pack is manufactured using at least one battery module by adding an additional component.

A method of manufacturing such a battery pack includes a process of fixing a busbar, configured to connect battery cells received in a cell frame to each other in series and/or in parallel, to the cell frame and a process of electrically connecting the busbar and the battery cells to each other by wire bonding or welding, as disclosed in Patent Document 1.

If the busbar is not fixed to the cell frame, however, the junction between the battery cell and the busbar formed by wire bonding or welding may be damaged.

Conventionally, therefore, in order to fix the busbar to the cell frame, a process of applying an adhesive to a frame on which the busbar is to be seated and hardening the adhesive after the busbar is seated on the frame is performed.

However, the conventional method has problems in that the process is complicated and the busbar may move or may be separated from the frame due to poor application or poor hardening of the adhesive.

### (Prior Art Documents)

(Patent Document 1) Korean Patent Application Publication No. 2019-0067326.
US2015179995A1 discloses a battery pack. US2015171403A1 discloses a bus bar module. US2018269459A1 discloses an electric storage module, a manufacturing method for an electric storage module, a metal joined body, and a manufacturing method for a metal joined body. KR20210063940A discloses a battery module and a battery pack.

### [Disclosure]

### [Technical Problem]

The present invention has been made in view of the above problems, and it is an object of the present invention to provide a busbar-integrated cell frame configured such that a busbar and a cell frame are integrally formed, whereby processes of joining the busbar may be omitted, and a battery module including the same.

It is another object of the present invention to provide a busbar-integrated cell frame capable of preventing movement or separation of a busbar and a battery module including the same.

### [Technical Solution]

A battery module according to the present invention according to claim 1 to accomplish the above objects includes a plurality of battery cells (100), a cell frame (200) configured to receive the plurality of battery cells (100), a busbar (300) configured to connect the plurality of battery cells (100) to each other in series and/or in parallel, and a bonding wire (400) configured to electrically connect the plurality of battery cells (100) to the busbar (300), wherein the busbar (300) includes one or more first busbars (310) and two second busbars (320), wherein the one or more first busbars (310) are located at an upper part of the cell frame (200) and the two second busbars (320) are located at opposite side surfaces of the cell frame (200), and wherein the cell frame (200) and the busbar (300) are configured to be integrally formed by insert injection molding.

Also, in the battery module according to the present invention, each of the plurality of battery cells (100) may be a cylindrical battery cell (100).

Also, in the battery module according to the present invention, each of the two second busbars (320) includes a first surface (321), a second surface (322), and a third surface (323), wherein the first surface (321) is coplanar with the first busbar (310), and the second surface (322) is connected to the first surface (321) in a bent shape, the second surface being located at a side surface of the cell frame (200), and wherein the third surface (323) is connected to the second surface (322) in a bent shape, the third surface being located at a front surface of the cell frame (200).

Also, in the battery module according to the present invention, the first busbar (310) and the second surface (322) of each of the two second busbars (320) are provided with a first through-hole (311) and a second through-hole (324), respectively.

Also, in the battery module according to the present invention, the first through-hole (311) includes a plurality of holes provided in the first busbar (310) so as to be spaced apart from each other by a predetermined distance, the second through-hole (324) includes a plurality of holes provided in the second surface (322) of each of the two second busbars (320) so as to be spaced apart from each other by a predetermined distance, and the first through-hole and the second through-hole are configured to be filled with a resin component that forms the cell frame (200).

Also, in the battery module according to the present invention, a first pin insertion hole (312) may be formed in the first busbar (310) and a second pin insertion hole (325) may be formed in the first surface

(321) of each of the two second busbars (320), such that the first busbar (310) and the two second busbars (320) are each configured to be fixed during the insert injection molding.

Also, in the battery module according to the present invention, the cell frame (200) may include a plurality of fixing portions (210) configured to fix the first busbar (310) and each of the two second busbars (320), wherein each of the plurality of fixing portions has a belt shape covering upper parts of the first busbar (310) and each of the two second busbars (320) over a predetermined area thereof in a width direction thereof.

Also, in the battery module according to the present invention, each of the plurality of fixing portions has a pin hole (211), wherein each of the pin holes may be formed in the fixing portion (210) at a position corresponding to the first pin insertion hole (312) and the second pin insertion hole (325).

Also, in the battery module according to the present invention, an electrode terminal (330) having a self-clinching stud structure may be coupled to the third surface (323) so as to be fastened to a power connection portion.

Also, in the battery module according to the present invention, the power connection portion may be a flange nut.

In addition, the present invention provides a method of manufacturing the battery module, the method including a) integrally forming the busbar (300) and the cell frame (200) by insert injection molding; b) receiving the plurality of battery cells (100) in the cell frame (200) integrally formed with the busbar (300); and c) electrically connecting the plurality of battery cells (100) to the busbar (300) using the bonding wire (400).

In addition, the present invention provides a battery pack including the battery module.

### [Advantageous Effects]

A battery module according to the present invention has an advantage in that a busbar and a cell frame are integrally formed through insert injection molding, whereby it is possible to omit processes of joining the busbar.

In addition, the battery module according to the present invention has an advantage in that a through-hole formed in the busbar is filled with a resin component that constitutes the cell frame such that the resin component and the busbar are integrally formed, whereby it is possible to prevent movement or separation of the busbar.

### [Description of Drawings]

FIG. 1 is a perspective view of a battery module according to an embodiment of the present invention.
FIG. 2 is a partial enlarged view of the battery module shown in FIG. 1.
FIG. 3 is a perspective view of a first busbar according to an embodiment of the present invention.
FIG. 4 is a perspective view of a second busbar according to an embodiment of the present invention.
FIG. 5 is a plan view (a) and a sectional view (b) schematically showing the state in which the first busbar is fixed to a cell frame according to an embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module according to the present invention will be described with reference to the accompanying drawings.

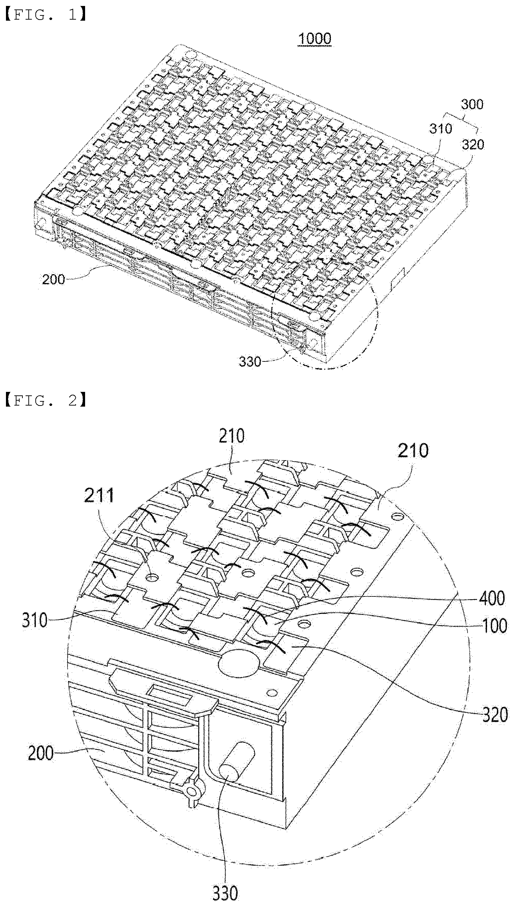

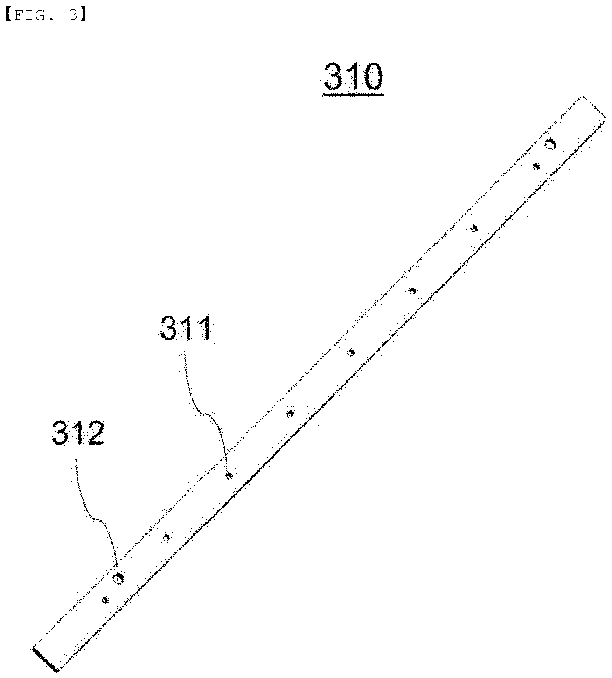

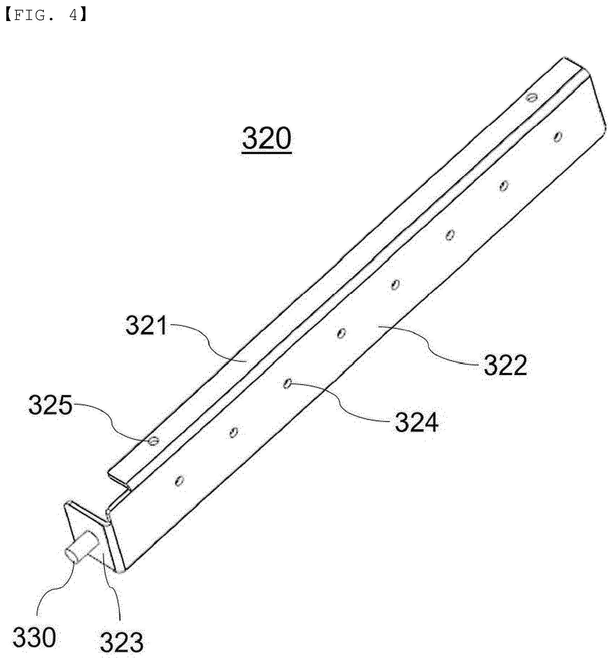

FIG. 1 is a perspective view of a battery module according to an embodiment of the present invention, FIG. 2 is a partial enlarged view of the battery module shown in FIG. 1, FIG. 3 is a perspective view of a first busbar according to an embodiment of the present invention, and FIG. 4 is a perspective view of a second busbar according to an embodiment of the present invention.

When describing the battery module 1000 according to the present invention with reference to FIGs. 1 to 4, the battery module 1000 includes a battery cell 100, a cell frame 200, a busbar 300, and a bonding wire 400.

Although the bonding wire 400 is omitted from FIG. 1, the structure in which the battery cell 100 and the busbar 300 are electrically connected to each other via the bonding wire 400 is shown in detail in the enlarged view of FIG. 2.

A plurality of battery cells 100 is provided in the battery module 1000, and various kinds of battery cells 100 may be employed as the battery cells 100.

Based on the shape of a case, the battery cell 100 may be mainly classified as a can-shaped battery cell having an electrode assembly mounted in a metal can or a pouch-shaped battery cell having an electrode assembly mounted in a pouch configured to have a laminate sheet structure.

The can-shaped battery cell may include a cylindrical battery and a prismatic battery generally classified based on the shape of the metal can.

A cylindrical secondary battery may include a cylindrical battery can, a jelly-roll type electrode assembly received in the battery can, and a cap assembly coupled to an upper part of the battery can. Here, the cylindrical battery can may be made of a lightweight conductive metal material, such as aluminum, stainless steel, or an alloy thereof.

In the present invention, the battery cell 100 is described as being a cylindrical battery cell 100; however, the scope of rights of the present invention is not limited thereto.

The cell frame 200 is a structure in which the plurality of battery cells 100 is received. The busbar 300 is seated on upper and side corners of the cell frame, and the battery cells 100 are received in the cell frame.

The cell frame 200 includes a fixing portion 210 configured to fix the busbar 300 seated thereon and a pin hole 211.

Here, the fixing portion 210 has a belt shape configured to cover upper parts of a first busbar 310 and a second busbar 320 over a predetermined area thereof in a width direction thereof. That is, the fixing portion 210 is not formed over the entirety of the upper parts of the first busbar 310 and the second busbar 320 but is formed so as to be spaced apart from each other by a predetermined distance such that a portion of the upper part of each of the first busbar 310 and the second busbar 320 is exposed.

Meanwhile, the busbar 300 includes one or more first busbars 310 located at an upper part of the cell frame 200 and two second busbars 320 located at opposite side surfaces of the cell frame 200.

The busbar 300 is made of a metal material that exhibits high electrical conductivity, and the width and the thickness of the busbar 300 may also be appropriately selected depending on the structure of the battery module 1000.

The first busbar 310 includes a first through-hole 311, which is filled with a resin component that forms the cell frame 200 during insert injection molding, and a first pin insertion hole 312, into which a molding pin used to fix the first busbar 310 is inserted during insert injection molding.

The second busbar 320 includes a first surface 321 located in the same plane as the first busbar 310, a second surface 322 connected to the first surface 321 in a bent shape, the second surface being located at a side surface of the cell frame 200, and a third surface 323 connected to the second surface 322 in a bent shape, the third surface being located at a front surface of the cell frame 200.

A second pin insertion hole 325, which performs the same function as the first pin insertion hole 312 of the first busbar 310, is formed in the first surface 321, and a second through-hole 324 is formed in the second surface 322.

An electrode terminal 330 configured to allow the battery module 1000 to be electrically connected to the outside therethrough is coupled to the third surface 323.

The electrode terminal 330, which has a self-clinching stud structure, is pressed into a hole formed in the third surface 323 of the second busbar 320 so as to be fixed thereto, and the second busbar 320 having the electrode terminal 330 fixed thereto is integrally formed with the cell frame 200 through insert injection molding, as described above.

A power connection portion is fastened to the electrode terminal 330, whereby electrical connection to the outside is achieved.

Meanwhile, the electrode terminal 330 may have a screw-threaded structure or a straight structure having no screw thread. When the screw-threaded electrode terminal 330 is used, it is preferable for the power connection portion to have a flange nut structure in order to achieve secure fastening therebetween.

Of course, the electrode terminal 330 having the self-clinching stud structure may be pressed into the second busbar 320; however, the present invention is not limited thereto, and the electrode terminal may be integrally formed with the second busbar 320.

The reason that the fixing portion 210 of the cell frame 200 is formed as described above is that an exposed region of the busbar 300 to which the bonding wire 400 is joined for electrical connection with the battery cells 100 is necessary at the upper part of the busbar 300.

In addition, the cell frame 200 according to the present invention is integrally formed with the busbar 300 through insert injection molding, and it is necessary to fix the busbar 300 so as not to deviate out of position during this process.

In the present invention, therefore, the busbar 300 is fixed using the molding pin, the resin component is hardened through insert injection molding, and the pin hole 211 is formed at the position from which the molding pin is removed.

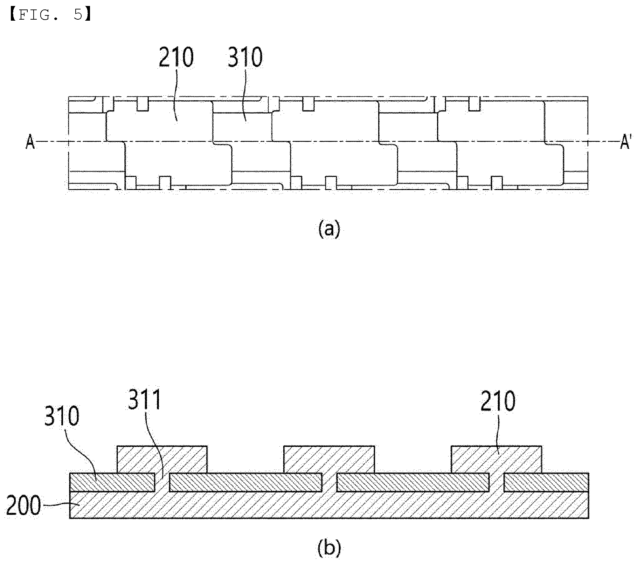

FIG. 5 is a plan view (a) and a sectional view (b) schematically showing the state in which the first busbar is fixed to a cell frame according to an embodiment of the present invention.

When describing the structure in which the first busbar 310 according to the embodiment of the present invention and the cell frame 200 are fixed to each other with reference to FIG. 5, the plurality of first through-holes 311 is provided in each of the first busbars 310 so as to be spaced apart from each other by a predetermined distance, the first through-holes 311 are filled with the resin component that forms the cell frame 200 during insert injection molding, and the resin component is hardened in a state of being connected to the fixing portion 210 above the first busbar 310, whereby the first busbar 310 is fixed to the cell frame 200, as previously described.

Although the first busbar 310 is described by way of example in FIG. 5, the second through-hole 324 of the second busbar 320 is filled with the resin component, in the same manner as the first through-holes 311, whereby the second busbar 320 is fixed to the cell frame 200.

Hereinafter, a method of manufacturing the battery module 1000 according to the present invention will be described.

The method of manufacturing the battery module 1000 according to the present invention includes a) a step of integrally forming the busbar 300 and the cell frame 200 by insert injection molding; b) a step of receiving the plurality of battery cells 100 in the cell frame 200 integrally formed with the busbar 300; and c) a step of electrically connecting the battery cells 100 to the busbar 300 using the bonding wire 400.

Here, in a step of preparing the busbar 300 before step a), a step of forming a first through-hole 311 and a first pin insertion hole in a first busbar 310 and forming a second through hole 324 and a second pin insertion hole 325 in a second busbar 320, and a step of coupling an electrode terminal 330 to the second busbar 320 may be further included.

In a method of forming the first through-hole 311 and the first pin insertion hole in the first busbar 310 and forming the second through hole 324 and the second pin insertion hole 325 in the second busbar 320, busbars 310 and 320 having no through-holes 311 and 324 and pin insertion holes 312 and 325 formed therein may be formed and then the through-holes and the pin insertion holes may be formed therein, or the through-holes 311 and 324 and the pin insertion holes 312 and 325 may be integrally formed with the busbars 310 and 320, respectively, during formation of the busbars.

Meanwhile, the step of integrally forming the busbar and the cell frame by insert injection molding includes a step of locating a prepared busbar 300 in a mold and fixing the busbar, a step of melting resin that forms a cell frame 200 and injecting the melted resin into the mold, and a step of cooling the resin so as to be hardened to manufacture the cell frame 200 integrally formed with the busbar 300.

In addition, after step c), a step of receiving the cell frame in a module case and a step of connecting various kinds of circuits to the cell frame may be added.

Since the cell frame 200 having the busbar 300 integrally formed therewith manufactured using the busbar 300 according to the present invention, as described above, is applied to a process, a process of joining the busbar 300 to the cell frame 200 may be omitted from a process of manufacturing the battery module 1000, whereby it is possible to reduce the number of manufacturing steps, manufacturing time, and manufacturing cost.

In addition, it is possible to prevent various kinds of defects due to separation or movement of the busbar 300.

The battery module 1000 thus manufactured may be used alone as a power source for various devices, or may be manufactured in the form of a battery pack so as to be used as the power source.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, as long as such changes and modifications fall within the scope of the appended claims.

### (Description of Reference Numerals)

- 1000:: Battery module
- 100:: Battery cell
- 200:: Cell frame
- 210:: Fixing portion
- 211:: Pin hole
- 300:: Busbar
- 310:: First busbar
- 311:: First through-hole
- 312:: First pin insertion hole
- 320:: Second busbar
- 321:: First surface
- 322:: Second surface
- 323:: Third surface
- 324:: Second through-hole
- 325:: Second pin insertion hole
- 330:: Electrode terminal
- 400:: Bonding wire

## Claims

1. A battery module (1000) comprising:
a plurality of battery cells (100);
a cell frame (200) configured to receive the plurality of battery cells;
a busbar (300) configured to connect the plurality of battery cells to each other in series and/or in parallel; and
a bonding wire (400) configured to electrically connect the plurality of battery cells to the busbar,
wherein the busbar comprises one or more first busbars (310) and two second busbars (320), wherein the one or more first busbars are located at an upper part of the cell frame and the two second busbars are located at opposite side surfaces of the cell frame,
wherein the cell frame and the busbar are configured to be integrally formed by insert injection molding,
wherein each of the two second busbars comprises a first surface (321), a second surface (322), and a third surface (323),
wherein the first surface is coplanar with the first busbar,
wherein the second surface is connected to the first surface in a bent shape, the second surface being located at a side surface of the cell frame,
wherein the third surface is connected to the second surface in a bent shape, the third surface being located at a front surface of the cell frame,
wherein the first busbar and the second surface of each of the two second busbars are provided with a first through-hole (311) and a second through-hole (324), respectively,
wherein the first through-hole comprises a plurality of holes provided in the first busbar so as to be spaced apart from each other by a predetermined distance,
wherein the second through-hole comprises a plurality of holes provided in the second surface of each of the two second busbars so as to be spaced apart from each other by a predetermined distance, and
wherein the first through-hole and the second through-hole are configured to be filled with a resin component that forms the cell frame.

2. The battery module according to claim 1, wherein each of the plurality of battery cells is a cylindrical battery cell.

3. The battery module according to claim 1, wherein a first pin insertion hole (312) is formed in the first busbar and a second pin insertion hole (325) is formed in the first surface of each of the two second busbars, such that the first busbar and the two second busbars are each configured to be fixed during the insert injection molding.

4. The battery module according to claim 3, wherein the cell frame comprises a plurality of fixing portions (210) configured to fix the first busbar and each of the two second busbars, wherein each of the plurality of fixing portions has a belt shape covering upper parts of the first busbar and each of the two second busbars over a predetermined area thereof in a width direction thereof.

5. The battery module according to claim 4, wherein each of the plurality of fixing portions has a pin hole (211), wherein each of the pin holes is formed in the fixing portion at a position corresponding to the first pin insertion hole and the second pin insertion hole.

6. The battery module according to claim 1, wherein an electrode terminal (330) having a self-clinching stud structure is coupled to the third surface so as to be fastened to a power connection portion.

7. The battery module according to claim 6, wherein the power connection portion is a flange nut.

8. A method of manufacturing the battery module according to any one of claims 1 to 7, the method comprising:
a) integrally forming the busbar and the cell frame by insert injection molding;
b) receiving the plurality of battery cells in the cell frame integrally formed with the busbar; and
c) electrically connecting the plurality of battery cells to the busbar using the bonding wire.

9. A battery pack comprising the battery module according to any one of claims 1 to 7.

## Patentansprüche

1. Batteriemodul (1000), umfassend:
eine Vielzahl von Batteriezellen (100);
einen Zellenrahmen (200), der konfiguriert ist, um die Vielzahl von Batteriezellen aufzunehmen;
eine Stromschiene (300), die konfiguriert ist, um die Vielzahl von Batteriezellen miteinander in Reihe und/oder parallel zu verbinden; und
einen Bonddraht (400), der konfiguriert ist, um die Vielzahl von Batteriezellen elektrisch mit der Stromschiene zu verbinden,
wobei die Stromschiene eine oder mehrere erste Stromschienen (310) und zwei zweite Stromschienen (320) umfasst, wobei die eine oder die mehreren ersten Stromschienen an einem oberen Teil des Zellenrahmens angeordnet sind und die zwei zweiten Stromschienen an gegenüberliegenden Seitenflächen des Zellenrahmens angeordnet sind,
wobei der Zellenrahmen und die Stromschiene konfiguriert sind, um durch Umspritzung einstückig ausgebildet zu werden,
wobei jede der zwei zweiten Stromschienen eine erste Oberfläche (321), eine zweite Oberfläche (322) und eine dritte Oberfläche (323) umfasst,
wobei die erste Oberfläche koplanar mit der ersten Stromschiene ist,
wobei die zweite Oberfläche mit der ersten Oberfläche in einer gebogenen Form verbunden ist, wobei die zweite Oberfläche an einer Seitenfläche des Zellenrahmens angeordnet ist,
wobei die dritte Oberfläche mit der zweiten Oberfläche in einer gebogenen Form verbunden ist, wobei die dritte Oberfläche an einer vorderen Oberfläche des Zellenrahmens angeordnet ist,
wobei die erste Stromschiene und die zweite Oberfläche jeder der zwei zweiten Stromschienen mit einem ersten Durchgangsloch (311) bzw. einem zweiten Durchgangsloch (324) versehen sind,
wobei das erste Durchgangsloch eine Vielzahl von Löchern umfasst, die in der ersten Stromschiene vorgesehen sind, so dass sie in einem vorbestimmten Abstand voneinander beabstandet sind,
wobei das zweite Durchgangsloch eine Vielzahl von Löchern umfasst, die in der zweiten Oberfläche jeder der zwei zweiten Stromschienen vorgesehen sind, so dass sie in einem vorbestimmten Abstand voneinander beabstandet sind, und
wobei das erste Durchgangsloch und das zweite Durchgangsloch konfiguriert sind, um mit einer Harzkomponente gefüllt zu werden, die den Zellenrahmen bildet.

2. Batteriemodul nach Anspruch 1, wobei jede der Vielzahl von Batteriezellen eine zylindrische Batteriezelle ist.

3. Batteriemodul nach Anspruch 1, wobei ein erstes Stifteinführungsloch (312) in der ersten Stromschiene ausgebildet ist und ein zweites Stifteinführungsloch (325) in der ersten Oberfläche jeder der zwei zweiten Stromschienen ausgebildet ist, so dass die erste Stromschiene und die zwei zweiten Stromschienen jeweils konfiguriert sind, um während des Umspritzens fixiert zu werden.

4. Batteriemodul nach Anspruch 3, wobei der Zellenrahmen eine Vielzahl von Befestigungsabschnitten (210) umfasst, die konfiguriert sind, um die erste Stromschiene und jede der zwei zweiten Stromschienen zu befestigen, wobei jeder der Vielzahl von Befestigungsabschnitten eine Gurtform aufweist, die obere Teile der ersten Stromschiene und jeder der zwei zweiten Stromschienen über einen vorbestimmten Bereich davon in einer Breitenrichtung davon abdeckt.

5. Batteriemodul nach Anspruch 4, wobei jeder der Vielzahl von Befestigungsabschnitten ein Stiftloch (211) aufweist, wobei jedes der Stiftlöcher in dem Befestigungsabschnitt an einer Position ausgebildet ist, die dem ersten Stifteinführungsloch und dem zweiten Stifteinführungsloch entspricht.

6. Batteriemodul nach Anspruch 1, wobei ein Elektrodenanschluss (330) mit einer selbstsichernden Bolzenstruktur mit der dritten Oberfläche gekoppelt ist, um an einem Stromverbindungsabschnitt befestigt zu werden.

7. Batteriemodul nach Anspruch 6, wobei der Stromverbindungsabschnitt eine Flanschmutter ist.

8. Verfahren zur Herstellung des Batteriemoduls nach einem der Ansprüche 1 bis 7, wobei das Verfahren umfasst:
a) einstückiges Ausbilden der Stromschiene und des Zellenrahmens durch Umspritzung;
b) Aufnehmen der Vielzahl von Batteriezellen in dem einstückig mit der Stromschiene ausgebildeten Zellenrahmen; und
c) elektrisches Verbinden der Vielzahl von Batteriezellen mit der Stromschiene unter Verwendung des Bonddrahtes.

9. Batteriepack, umfassend das Batteriemodul nach einem der Ansprüche 1 bis 7.

## Revendications

1. Module de batterie (1000) comprenant :
une pluralité de cellules de batterie (100) ;
un châssis de cellule (200) configuré pour recevoir la pluralité de cellules de batterie ;
une barre omnibus (300) configurée pour connecter la pluralité de cellules de batterie les unes aux autres en série et/ou en parallèle ; et
un fil de liaison (400) configuré pour connecter électriquement la pluralité de cellules de batterie à la barre omnibus,
dans lequel la barre omnibus comprend une ou plusieurs premières barres omnibus (310) et deux deuxièmes barres omnibus (320), dans lequel la ou les premières barres omnibus sont situées dans une partie supérieure du châssis de cellule et les deux deuxièmes barres omnibus sont situées sur des surfaces latérales opposées du châssis de cellule,
dans lequel le châssis de cellule et la barre omnibus sont configurés pour être formés d'un seul tenant par moulage par injection et insertion,
dans lequel chacune des deux deuxièmes barres omnibus comprend une première surface (321), une deuxième surface (322) et une troisième surface (323),
dans lequel la première surface est coplanaire avec la première barre omnibus,
dans lequel la deuxième surface est connectée à la première surface selon une forme courbée, la deuxième surface étant située sur une surface latérale du châssis de cellule,
dans lequel la troisième surface est connectée à la deuxième surface selon une forme courbée, la troisième surface étant située sur une surface avant du châssis de cellule,
dans lequel la première barre omnibus et la deuxième surface de chacune des deux deuxièmes barres omnibus sont pourvues d'un premier trou traversant (311) et d'un deuxième trou traversant (324), respectivement,
dans lequel le premier trou traversant comprend une pluralité de trous ménagés dans la première barre omnibus de manière à être espacés les uns des autres d'une distance prédéterminée,
dans lequel le deuxième trou traversant comprend une pluralité de trous ménagés dans la deuxième surface de chacune des deux deuxièmes barres omnibus de manière à être espacés les uns des autres d'une distance prédéterminée, et
dans lequel le premier trou traversant et le deuxième trou traversant sont configurés pour être remplis d'un composant en résine qui forme le châssis de cellule.

2. Module de batterie selon la revendication 1, dans lequel chacune de la pluralité de cellules de batterie est une cellule de batterie cylindrique.

3. Module de batterie selon la revendication 1, dans lequel un premier trou d'insertion de broche (312) est formé dans la première barre omnibus et un deuxième trou d'insertion de broche (325) est formé dans la première surface de chacune des deux deuxièmes barres omnibus, de telle sorte que la première barre omnibus et les deux deuxièmes barres omnibus sont chacune configurées pour être fixées pendant le moulage par injection et insertion.

4. Module de batterie selon la revendication 3, dans lequel le châssis de cellule comprend une pluralité de portions de fixation (210) configurées pour fixer la première barre omnibus et chacune des deux deuxièmes barres omnibus, dans lequel chacune de la pluralité de portions de fixation a une forme de ceinture couvrant des parties supérieures de la première barre omnibus et de chacune des deux deuxièmes barres omnibus sur une zone prédéterminée de celles-ci dans une direction de leur largeur.

5. Module de batterie selon la revendication 4, dans lequel chacune de la pluralité de portions de fixation a un trou de broche (211), dans lequel chacun des trous de broche est formé dans la portion de fixation à une position correspondant au premier trou d'insertion de broche et au deuxième trou d'insertion de broche.

6. Module de batterie selon la revendication 1, dans lequel une borne d'électrode (330) ayant une structure de goujon auto-sertissable est couplée à la troisième surface de manière à être fixée à une portion de connexion d'alimentation.

7. Module de batterie selon la revendication 6, dans lequel la portion de connexion d'alimentation est un écrou à embase.

8. Procédé de fabrication du module de batterie selon l'une quelconque des revendications 1 à 7, le procédé comprenant :
a) une formation d'un seul tenant de la barre omnibus et du châssis de cellule par moulage par injection et insertion ;
b) une réception de la pluralité de cellules de batterie dans le châssis de cellule formé d'un seul tenant avec la barre omnibus ; et
c) une connexion électrique de la pluralité de cellules de batterie à la barre omnibus en utilisant le fil de liaison.

9. Bloc-batterie comprenant le module de batterie selon l'une quelconque des revendications 1 à 7.
